(19) Europäisches Patentamt
European Patent Office
Office européen des brevets

(11) Veröffentlichungsnummer: **0 372 404**
**A2**

(12) **EUROPÄISCHE PATENTANMELDUNG**

(21) Anmeldenummer: **89122148.3**

(22) Anmeldetag: **30.11.89**

(51) Int. Cl.5: **C08J 5/06, C08L 97/02**

(30) Priorität: **08.12.88 DE 3841310**

(43) Veröffentlichungstag der Anmeldung:
**13.06.90 Patentblatt 90/24**

(84) Benannte Vertragsstaaten:
**AT BE CH ES FR GB IT LI NL SE**

(71) Anmelder: **WERZALIT AG + CO.**
**Gronauer Strasse 70**
**D-7141 Oberstenfeld(DE)**

(72) Erfinder: **Dietz, Martin**
**Hauptstrasse 6**
**D-7173 Mainhardt(DE)**
Erfinder: **Asseier, Bernd**
**Bietigheimer Strasse 77/1**
**D-7149 Freiberg(DE)**

(74) Vertreter: **Bögl, Wolfgang, Dipl.-Ing.**
**Hölderlinstrasse 16**
**D-7121 Mundelsheim(DE)**

(54) Verfahren zur Herstellung eines pressfähigen Gemisches.

(57) Es wird ein Verfahren vorgeschlagen, mit welchem lignozellulosehaltige Fasern behandelt werden sollen, um ihre Verbindungsfähigkeit mit einem Thermoplast zu verbessern. Derartige Fasern werden für die Herstellung von Halbzeugplatten benötigt. Bei dem vorgeschlagenen Verfahren werden die Fasern zunächst mit einem Aminoplast, einem Hydrophobierungsmittel und einer Metacrylat-Polyäthylen-Dispersion gemischt. Die derart vorbehandelten Fasern werden danach mit dem Thermoplastpulver gemischt.

EP 0 372 404 A2

## Verfahren zur Herstellung eines preßfähigen Gemisches.

Die Erfindung betrifft ein Verfahren zur Herstellung eines preßfähigen Gemisches aus lignozellulosehaltigen Fasern und einem thermoplastischen Kunststoff. Ein solches Verfahren ist bekannt ( DE - A - 32 30 888 ).

Es werden bereits seit längerer Zeit in zunehmendem Umfang Formteile, beispielsweise für die Verwendung in der Kraftfahrzeugproduktion, aus Thermoplast - Glasfaser - Halbzeugplatten hergestellt.

Glasfaser - Thermoplast - Formteile, auch GMT ( Glasmattenverstärkter Thermoplast ) genannt, werden üblicherweise in folgender Weise hergestellt : Zunächst werden auf einer Laminierpresse Halbzeugplatten aus Glasfasern und einem thermoplastischen Kunststoff hergestellt. Diese Halbzeugplatten werden in einem zweiten Verfahrensschritt außerhalb einer Presse bis zur Erweichungstemperatur des Thermoplasten aufgeheizt und anschließend in gekühlten Preßwerkzeugen unter hohem Druck zu Formteilen verpreßt. Bei diesem Verfahren ist üblicherweise der Materialzuschnitt der Halbzeugplatten kleiner als die Größe des fertig gepreßten Formteiles, d.h. der Werkstoff der Halbzeugplatte fließt gleichzeitig beim Pressen. Es findet ein sogenanntes Fließpressen statt.

Diese durch Fließpressen hergestellten Glasfaser - Thermoplastformteile erfüllen die an sie gestellten Anforderungen, insbesondere auch hinsichtlich der Festigkeitswerte. Sie weisen jedoch den Nachteil auf, daß sie verhältnismäßig teuer sind und ihre Anwendung daher aus preislichen Gründen beschränkt ist.

Formteile für die bereits erwähnten und weitere Anwendungsfälle ließen sich in gleicher Qualität, jedoch preisgünstiger herstellen, wenn bei der Herstellung der Halbzeugplatten anstelle der Glasfasern lignozellulosehaltige Fasern verwendet würden. Bei den lignozellulosehaltigen Fasern könnte es sich beispielsweise um zerkleinerte und getrocknete Holzspäne, Bagassefasern u.ä. handeln. Es ist jedoch schwierig, aus den lignozellulosehaltigen Fasern und einem Thermoplast Halbzeugplatten herzustellen, weil die lignozellulosehaltigen Fasern natürliche Harzanteile enthalten, welche verhindern, daß die Fasern mit dem Thermoplast eine feste Bindung eingehen.

Bei dem eingangs erwähnten bekannten Verfahren ist zur Überwindung dieses Hindernisses beispielsweise vorgeschlagen worden, die lignozellulosehaltigen Fasern vor dem Mischen mit dem Thermoplast einer ionisierenden Bestrahlung, wie einer γ - Bestrahlung, zu unterwerfen. Es ist fraglich, ob sich eine solche Behandlungsweise großtechnisch verwirklichen ließe und falls dies zuträfe, sie zu einer kostengünstigeren Herstellung von Thermoplast - Holzfaser - Halbzeugplatten führen würde.

Das der Erfindung zugrunde liegende technische Problem besteht deshalb darin, ein Behandlungsverfahren für lignozellulosehaltige Fasern anzugeben, mit dem diese in der Weise vorbereitet werden, daß sie beim Pressen von Halbzeugplatten eine feste Bindung mit dem Thermoplast eingehen.

Dieses Problem wird gemäß der Erfindung dadurch gelöst, daß die Fasern mit 2 - 8 Gew.% eines Duroplastes, 0,5 - 2 Gew.% eines Hydrophobierungsmittels und 2 - 10 Gew.% einer Metacrylat - Polyäthylen - Dispersion in einem Mischer gemischt werden und 100 Gewichtsteile der derart vorbehandelten Fasern mit 120 - 150 Gewichtsteilen eines Thermoplastpulvers gemischt werden.

Aus den in dieser Weise vorbehandelten Fasern können in an sich bekannter Weise, beispielsweise mit Streumaschinen oder Mattenformköpfen, Faserstoffmatten erzeugt werden. Diese Faserstoffmatten können ebenfalls in an sich bekannter Weise auf beheizten und ggf. rückgekühlten Pressen zu Halbzeugplatten verpreßt werden. Aus den Halbzeugplatten schließlich lassen sich auf den gleichen Vorrichtungen, mit welchen die Glasfaser - Thermoplast - Halbzeugplatten verarbeitet werden, und in gleicher Weise, nämlich durch Vorheizen der Halbzeugplatten und anschließendes Fließpressen in gekühlten Werkzeugen Formteile herstellen.

Diese Formteile weisen nach bisherigen Erkenntnissen nur geringfügig schlechtere Eigenschaften als die Glasfaser -Thermoplast - Formteile auf. Sie sind jedoch für viele Anwendungsfälle ausreichend und wesentlich besser als die bekannten Holzfaser - Formteile aus einem Gemisch von lignozellulosehaltigen Fasern und einem wärmehärtbaren Duroplast.

Bei Untersuchungen des erfindungsgemäßen Verfahrens haben sich für die Vorbehandlung der lignozellulosehaltigen Fasern folgende Einzelheiten als vorteilhaft erwiesen : Die lignozellulosehaltigen Fasern sollten einen Feuchtigkeitsgehalt unter 2 % atro aufweisen. Als Duroplast können Kombinationen von flüssigen Amino- bzw. Phenoplasten verwendet werden. Diese wässrigen Harzdispersionen verbessern die Anlagerungs- und Haftfähigkeit des Thermoplastpulvers an den lignozellulosehaltigen Fasern. Als Hydrophobierungsmittel, d.h. Feuchtigkeitsschutzmittel, ist eine handelsübliche , beispielsweise 60%ige Paraffinemulsion geeignet. Die Metacrylat - Polyäthylen -Dispersion verbessert im Zusammenwirken mit dem Harnstoffharz die Verbindungsfähigkeit von lignozellulosehaltigen Fasern und Thermoplast weiter.

Günstige Ergebnisse mit den erfindungsgemäßen Verfahren sind dann erzielt worden, wenn die Fasern mit 3 Gew.% des Duroplasts und 3 Gew.% der wässerigen Metacrylat - Polyäthylen - Dispersion gemischt wurden, sowie zusätzlich 2 - 10 Gew.% einer wässrigen Metacrylatdispersion und/oder einer Polyäthylendispersion zugegeben wurden.

Das Thermoplastpulver ist entsprechend den Eigenschaften zu wählen, welche das fertige Formteil besitzen soll. Für manche Formteile wird beispielsweise Polypropylen der geeignete Thermoplast sein und für andere Formteile Polyäthylen oder ein anderer Thermoplast.

## Ansprüche

1. Verfahren zur Herstellung eines preßfähigen Gemisches aus lignozellulosehaltigen Fasern und einem thermoplastischen Kunststoff,
dadurch gekennzeichnet, daß die Fasern mit
2 - 8 Gew.% eines Duroplastes
0,5 - 2 Gew.% eines Hydrophobierungsmittels
und 2 - 10 Gew.% einer Metacrylat - Polyäthylen-Dispersion
in einem Mischer gemischt werden und 100 Gewichtsteile der derart vorbehandelten Fasern mit 120 bis 150 Gewichtsteilen eines Thermoplastpulvers gemischt werden.

2. Verfahren nach Anspruch 1,
dadurch gekennzeichnet, daß die Fasern mit 3 Gew.% des Duroplastes und 3 Gew.% einer wässrigen Metacrylat - Polyäthylen - Dispersion gemischt werden.

3. Verfahren nach den Ansprüchen 1 und 2,
dadurch gekennzeichnet, daß der Mischung beim Vorbehandeln der Fasern zusätzlich 2 - 10 Gew.% einer wässrigen Metacrylatdispersion und/oder einer Polyäthylendispersion zugegeben werden.